# EUROPEAN PATENT SPECIFICATION

(11) **EP 3 683 141 B1**
(45) Date of publication and mention of the grant of the patent: **30.06.2021**
(21) Application number: 20152140.8
(22) Date of filing: 16.01.2020
(51) Int. Cl.: B64C 27/32, B64C 27/46, B64C 27/467, B64C 11/08, B64C 11/18, B64C 27/26, B64C 27/80, B64C 29/02, B64C 27/10, B64C 11/48, B64C 11/00, B64C 11/02, B64C 11/04, B64C 11/16, B64C 11/46, B64C 27/04, B64C 27/08, B64C 27/54, B64C 29/00, B64C 39/02, B64C 27/72, B64C 27/82, B64C 27/22, B64C 11/50

(54) **MULTI-BLADE ROTOR SYSTEM**
MEHRSCHAUFELROTORSYSTEM
SYSTÈME DE ROTOR À PALES MULTIPLES

(30) Priority: 16.01.2019 US 201916249544
(43) Date of publication of application: 22.07.2020
(73) Proprietor: Bell Textron Inc., Fort Worth, TX 76101 (US)
(72) Inventor: EASLEY, Dakota, Dallas, TX 75204 (US); WITTMAAK, John Roberts Jr, Newark, TX 76071 (US); LOUIS, Matthew Edward, Fort Worth, TX 76118 (US); PETERS, Russell C., Fort Worth, TX 76118 (US)
(74) Representative: Barker Brettell LLP

(56) References cited:
- EP-A1- 0 757 647
- EP-A1- 3 290 337
- WO-A1-2019/213540
- US-A1- 2016 368 601
- US-A1- 2017 174 323
- US-A1- 2018 002 009
- US-A1- 2018 186 448

## Description

### TECHNICAL FIELD

This disclosure relates in general to the field of aircraft and, more particularly, though not exclusively, to multi-blade rotor systems.

### BACKGROUND

There are numerous considerations involved in the design of aircraft, such as rotorcraft, including size, weight, power efficiency, fuel efficiency, noise, vibration, structural loads, and so forth. In many cases, however, it may be challenging to improve certain aspects of an aircraft without disrupting other aspects. For example, rotor blade designs for aircraft rotor systems can implicate numerous performance considerations and is often an extremely challenging aspect of aircraft design.

US2016/368601A1 discloses a winged VTOL aircraft of novel configuration that utilizes a single-axis rotor mounted at an oblique angle within a forward-facing, bifurcating duct, that is controlled by a plurality of servo driven vanes, producing a mechanically simple, redundantly controlled vehicle that can carry cargo, people, or otherwise, directly from point to point. The configuration uses sets of vanes to produce both moments and forces referenced around the vehicle's center of gravity, thereby, allowing the vehicle to translate in a level position, or stay stationary relative to the ground while at a slight pitch or roll attitude. This feature allows autonomous vehicles to accurately pick up and drop off payloads on unlevel terrain or in windy conditions.

US2017/174323A1 discloses that multiple propeller blades may be joined by tip connectors to form a closed propeller apparatus. The tip connectors may create continuous structure between adjacent tips of a first propeller and a second propeller. In some embodiments, the tip connectors may be formed of a malleable material and/or include one or more joints that enable at least one of the propellers to modify a pitch of blades of the propeller.

EP0757647A1 discloses a high-lift main rotor system is provided for a full-size or model helicopter. Main rotor system includes rotor blades and subrotor blades for producing aerodynamic lift. The subrotor blades act to augment control and stability of main rotor. Main rotor blades are configured to include airfoiled cross sections of varying shape and are mounted to a rotor hub to fold within limits about a horizontal flapping axis. A linkage including swashplate is provided for transmitting pilot control commands to the rotating rotor blades.

US2018/186448A1 discloses an aerial vehicle including rotor units connected to the aerial vehicle, and a control system configured to operate at least one of the rotor units. The rotor unit includes rotor blades, wherein each rotor blade includes a surface area, and wherein an asymmetric parameter is defined, at least in part, by the relationship between the surface areas of the rotor blades. The value of the asymmetric parameter is selected such that the operation of the rotor unit: (i) moves the rotor blades such that each rotor blade produces a respective vortex and (ii) the respective vortices cause the rotor unit to produce a sound output having an energy distribution defined, at least in part, by a set of frequencies, wherein the set of frequencies includes a fundamental frequency, one or more harmonic frequencies, and one or more non-harmonic frequencies having a respective strength greater than a threshold strength.

EP3290337A1 discloses a tail sitter aircraft which includes a fuselage having a forward portion and an aft portion. The forward portion of the fuselage includes first and second rotor stations. A first rotor assembly is positioned proximate the first rotor station. A second rotor assembly is positioned proximate the second rotor station. A tailboom assembly extends from the aft portion of the fuselage and includes a plurality of landing members. A pusher propeller extends from the tailboom assembly. In a vertical takeoff and landing mode, the first and second rotor assemblies rotate about the fuselage to provide vertical thrust. In a forward flight mode, rotation of the pusher propeller provides forward thrust and the first and second rotor assemblies are non-rotatable about the fuselage forming a dual wing configuration to provide lift.

US2018/002009A1 discloses a propulsion assembly for an aircraft including a nacelle, at least one self-contained fuel tank disposed within the nacelle operable to contain a liquid fuel, an engine disposed within the nacelle operable to run on the liquid fuel, a drive system mechanically coupled to the engine and operable to rotate responsive to rotation of the engine, a rotor hub mechanically coupled to the drive system operable to rotate responsive to rotation of the drive system and a proprotor mechanically coupled to the rotor hub and operable to rotate therewith.

### SUMMARY

According to one aspect of the present disclosure, a rotor system may be provided and may include a first pair of rotor blades comprising a first pitch and a first diameter; and a second pair of rotor blades comprising a second pitch and a second diameter, wherein the first pitch of the first pair of rotor blades and the second pitch of the second pair of rotor blades are different and wherein the first pair of rotor blades and the second pair of rotor blades are configured in the same horizontal plane.

### BRIEF DESCRIPTION OF THE DRAWINGS

To provide a more complete understanding of the present disclosure and features and advantages thereof, reference is made to the following description, taken in conjunction with the accompanying figures, in which like reference numerals represent like elements.
FIGS. 1A-1B are simplified diagrams of an example aircraft, not covered by the scope of the appended claims.
FIGS. 2A-2E are simplified diagrams illustrating example details that may be associated with a multi-blade rotor system, in accordance with certain, 2B and 2E not being covered by the scope of the appended claims.
FIG. 3 is a simplified side view diagram illustrating other example details that may be associated another multi-blade rotor system, in accordance with certain embodiments.
FIGS. 4A-4B are simplified top view diagrams illustrating yet other example details that may be associated with multi-blade rotor systems, in accordance with certain embodiments.
FIG. 5 is a simplified top view diagram illustrating yet other example details that may be associated with another multi-blade rotor system, in accordance with certain embodiments.
FIG. 6 is a graph illustrating thrust comparisons between two example multi-blade rotor systems, in accordance with certain embodiments.

### DETAILED DESCRIPTION

The following disclosure describes various illustrative embodiments and examples for implementing the features and functionality of the present disclosure. While particular components, arrangements, and/or features are described below in connection with various example embodiments, these are merely examples used to simplify the present disclosure and are not intended to be limiting. It will of course be appreciated that in the development of any actual embodiment, numerous implementation-specific decisions must be made to achieve the developer's specific goals, including compliance with system, business, and/or legal constraints, which may vary from one implementation to another. Moreover, it will be appreciated that, while such a development effort might be complex and time-consuming; it would nevertheless be a routine undertaking for those of ordinary skill in the art having the benefit of this disclosure.

In the Specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as 'above', 'below', 'upper', 'lower', 'top', 'bottom', or other similar terms to describe a spatial relationship between various components or to describe the spatial orientation of aspects of such components, should be understood to describe a relative relationship between the components or a spatial orientation of aspects of such components, respectively, as the components described herein may be oriented in any desired direction. When used to describe a range of dimensions or other characteristics (e.g., time, pressure, temperature, length, width, etc.) of an element, operations, and/or conditions, the phrase 'between X and Y' represents a range that includes X and Y.

Additionally, as referred to herein in this Specification, the terms 'forward', 'aft', 'inboard', and 'outboard' may be used to describe relative relationship(s) between components and/or spatial orientation of aspect(s) of a component or components. The term 'forward' may refer to a spatial direction that is closer to a front of an aircraft relative to another component or component aspect(s). The term 'aft' may refer to a spatial direction that is closer to a rear of an aircraft relative to another component or component aspect(s). The term 'inboard' may refer to a location of a component that is within the fuselage of an aircraft and/or a spatial direction that is closer to or along a centerline of the aircraft (wherein the centerline runs between the front and the rear of the aircraft) or other point of reference relative to another component or component aspect. The term 'outboard' may refer to a location of a component that is outside the fuselage of an aircraft and/or a spatial direction that farther from the centerline of the aircraft or other point of reference relative to another component or component aspect.

Further, the present disclosure may repeat reference numerals and/or letters in the various examples. This repetition is for the purpose of simplicity and clarity and does not in itself dictate a relationship between the various embodiments and/or configurations discussed. Example embodiments that may be used to implement the features and functionality of this disclosure will now be described with more particular reference to the accompanying FIGURES.

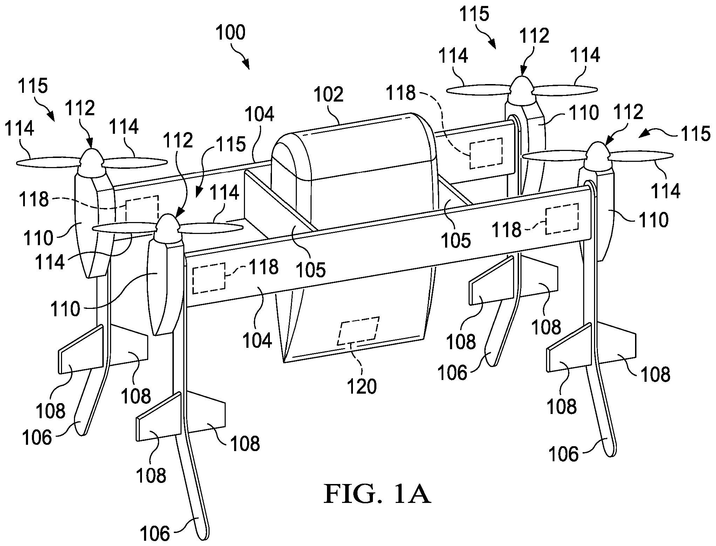

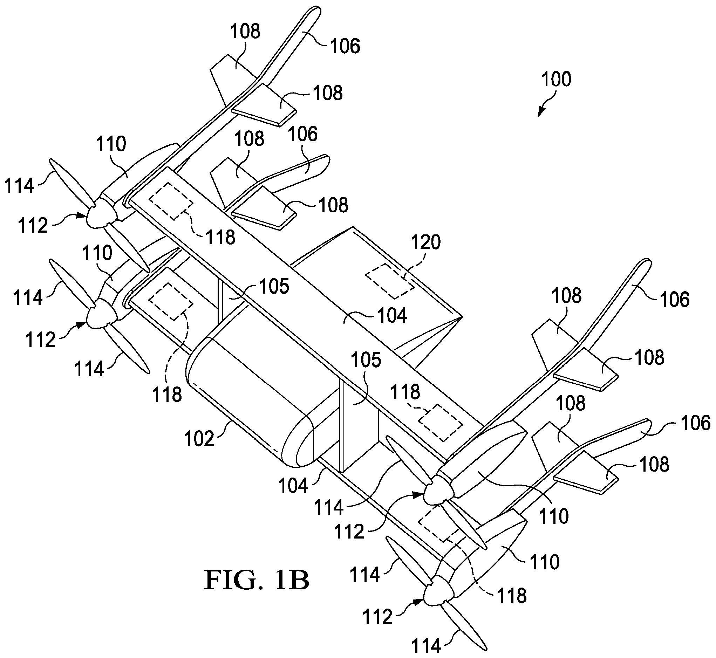

Referring now to FIGS. 1A-1B, not covered by the scope of the appended claims, FIGS. 1A-1B illustrate examples of an example aircraft 100, which in these examples is generally configured as a vertical takeoff and landing (VTOL) aircraft. More specifically, aircraft 100 may be an autonomous pod transport (APT) convertible drone-type aircraft (discussed in further detail below) that is operable in different flight modes including a helicopter mode (as shown in FIG. 1A) and an airplane mode (as shown in FIG. 1B). Within helicopter mode, aircraft 100 may be capable of various flight maneuvers including, but not limited to, vertical takeoff from and landing to one or more landing zone(s), hover, and/or sideward and rearward mobility or flight. Within airplane mode, aircraft 100 may be capable of forward flight maneuvers. Additionally, since aircraft 100 is a convertible aircraft, it is also operable in a conversion mode when transitioning between the helicopter and airplane modes.

Unlike fixed-wing aircraft, VTOL aircraft do not require runways. Instead, VTOL aircraft are capable of taking off, hovering, and landing vertically. One example of VTOL aircraft is a helicopter, which is a rotorcraft having one or more rotors that provide vertical lift and forward thrust to the aircraft. Helicopter rotors not only enable hovering and vertical takeoff and vertical landing, but also enable forward, aftward, and lateral flight. These attributes make helicopters highly versatile for use in congested, isolated or remote areas where fixed-wing aircraft may he unable to take off and land. Helicopters, however, typically lack the forward airspeed of fixed-wing aircraft.

A tiltrotor is another example of a VTOL aircraft. Tiltrotor aircraft utilize tiltable rotor systems that may be transitioned between a forward thrust orientation and a vertical lift orientation. The rotor systems are tiltable relative to one or more fixed wings such that the associated proprotors have a generally horizontal plane of rotation for vertical takeoff, hovering, and vertical landing and a generally vertical plane of rotation for forward flight, or airplane mode, in which the fixed wing or wings provide lift. In this manner, tiltrotor aircraft combine the vertical lift capability of a helicopter with the speed and range of fixed-wing aircraft.

Yet another type of VTOL aircraft is commonly referred to as a 'tail-sitter' aircraft. As the name implies, a tail-sitter aircraft takes off and lands on its tail, but tilts horizontally for forward flight. As illustrated in FIGS. 1A-1B, aircraft 100 is configured as a tail-sitter aircraft.

VTOL aircraft may be manned or unmanned. An unmanned aerial vehicle (UAV), also commonly referred to as a 'drone', is an aircraft without a human pilot aboard. UAVs may be used to perform a variety of tasks, including filming, package delivery, surveillance, and other applications. A UAV typically forms a part of an unmanned aircraft system (UAS) that includes the UAV, a ground-based controller, and a system of communication between the vehicle and controller. Being a drone-type aircraft, aircraft 100 is configured for remote control and operation. Additionally, at least in some embodiments, aircraft 100 may be fully autonomous and self-directed via a predetermined or preprogrammed location-based guidance system (e.g., global positioning system (GPS), coordinate-based location, street address, etc.).

In at least one embodiment, aircraft 100 may include a cargo pod 102 that functions as the fuselage, wings 104, vertical supports 105 disposed between the wings 104, tail booms 106, horizontal stabilizers 108 extending from each tail boom 106, and a plurality of pylons 110 each comprising a rotor system 112 having a plurality of rotor blades 114. Each combination of a pylon 110 and its associated rotor system 112 comprising rotor blades 114 may be referred to herein as a propulsion assembly 115. Aircraft 100 may also include plurality of aircraft sensors 118 and a control system 120. Wings 104 comprise a substantially parallel, double-wing (sometimes referred to as 'biplane') configuration that provides lift to the aircraft 100 during forward flight (e.g., as shown in FIG. 1B) while also maintaining a smaller footprint of the aircraft 100 when the aircraft 100 is on the ground. Vertical supports 105 are disposed on each side of the cargo pod 102 and affixed between the wings 104 to provide structure and support to the wings 104. The cargo pod 102 is generally positioned between the wings 104 and the vertical supports 105. In the embodiment shown, the cargo pod 102 is affixed to the vertical supports 105. However, in other embodiments, the cargo pod 102 may be affixed to the wings 104 or both the wings 104 and vertical supports 105. Additionally, while two vertical supports 105 are shown, in some embodiments, aircraft 100 may comprise more vertical supports 105 depending on the configuration of the aircraft 100.

Tail booms 106 are disposed on the outboard ends of each wing 104. The tail booms 106 are curved at the aft ends to provide stabilization to the aircraft 100 during forward flight in a manner substantially similar as other tail surfaces known in the art, while also doubling as a landing gear for the aircraft 100. As such the curved ends of the tail booms 106 may provide a wider base for landing gear uses. Each tail boom 106 also comprises a pair of horizontal stabilizers 108 coupled to each of an inner and outer surface of the tail boom 106. The horizontal stabilizers 108 function to provide stabilization to the aircraft 100 during forward flight in a manner substantially similar as horizontal stabilizers known in the art. Pylons 110 are disposed on outboard sides of each tail boom 106 proximate the outboard end of each wing 104. Each pylon 110 comprises a selectively rotatable rotor system 112 having a plurality of rotor blades 114 coupled thereto. In the embodiment shown, each rotor system 112 is driven by an associated electric motor (not shown) within each pylon 110. However, in other embodiments, the rotor systems 112 may be driven by a combustion engines or auxiliary power unit through a plurality of interconnect driveshafts and/or auxiliary gearboxes, which may be housed within any portion of an aircraft (e.g., within a pylon, fuselage, combinations thereof, or the like). Furthermore, since aircraft 100 functions as a convertible aircraft, the rotational speeds of each rotor system 112 may be selectively controlled to orient aircraft 100 in the various flight modes.

In various embodiments, control system 120 may include one or more processor(s), memory element(s), network connectivity device(s), storage, input/output (I/O) device(s), combinations thereof, or the like to facilitate operations of each propulsion assembly 115 and/or other electronic systems of aircraft 100. In various embodiments, operation of each propulsion assembly 115 may include controlling the rotational speed of rotor systems 112, adjusting thrust vectors of rotor systems 112, and the like to facilitate vertical lift operations, forward thrust operations, transition operations, combinations thereof, or the like for aircraft 100. In some embodiments, feedback may be received by control system 120 (e.g., via each propulsion assembly 115, one or more sensors 118, etc.) to facilitate or augment various operations of aircraft 100. In various embodiments, sensors 118 may include, but not be limited to, positioning sensors, attitude sensors, speed sensors, environmental sensors, fuel sensors, temperature sensors, location sensors, combinations thereof, or the like.

When aircraft 100 is in a helicopter mode position, rotor systems 112 may provide a vertical lifting thrust for aircraft 100, which may enable hover flight operations to be performed by aircraft 100. When aircraft 100 is in an airplane mode position, rotor systems 112 may provide a forward thrust and a lifting force may be supplied by wings 104.

Some VTOL UAVs may include adjustable pitch rotor blades, which may facilitate (among other features) selective control of thrust and/or lift for the aircraft though collective pitch control (e.g., the pitch of all of the rotor blades can be adjusted in a collective manner). However, providing collective pitch control for an aircraft may impact many design considerations including increasing flight control complexity, increasing rotor system complexity, increasing cost, and/or increasing weight, among others. In contrast, fixed pitch rotor blades for VTOL UAV rotor systems may provide various advantages including decreasing flight control complexity, decreasing rotor system complexity, decreasing cost, and/or decreasing weight in comparison to adjustable pitch rotor blade systems.

Typically, fixed pitch rotor systems include a single pair of rotor blades in a propeller configuration that perform well for either hover operations or for forward flight operations, but not both. The result of such fixed pitch rotor systems is that, depending on the propeller chosen, the vehicle is only efficient in one phase or mode of flight.

In order to improve the performance of both phases of flight for a VTOL aircraft, such as aircraft 100, the present disclosure describes various embodiments in which each rotor system of an aircraft is a multi-blade rotor system including at least two pairs of rotor blades in which a first pair of rotor blades has a first pitch and a first diameter and a second pair of rotor blades has a second pitch and a second diameter. In at least one embodiment, the first pitch the first pitch of the first pair of rotor blades and the second pitch of the second pair of rotor blades is different such that one rotor blade pitch operates well for hover operations while the other rotor blade pitch operates well for forward flight operations.

In some embodiments, one or more additional pairs of rotor blades may be provided for rotor systems of an aircraft. In some embodiments, the one or more additional pairs of rotor blades may have a same or different pitch than the first and second pairs of rotor blades of the rotor system. In some embodiments, different pairs of rotor blades may have a same tip-to-tip diameter, while in other embodiments, different pairs of rotor blades may have different tip-to-tip diameters.

As referred to herein, the term 'fixed pitch' in reference to a pair of fixed pitch rotor blades refers to a pitch that is set for the rotor blades based on fabrication of the rotor blades and is unchangeable once the blades are fabricated. However, the pitch from the root end to the tip end of a fixed pitch rotor blade, as discussed herein, may vary according to a twist distribution fabricated for the blades, as is typically understood in the art, but this twist distribution is unchangeable once the blades are fabricated. Further as referred to herein, pitch of rotor blades may be discussed in units of mm/millimeters (or inches) or in units of degrees (e.g., for pitch angles). Within the realm of UAVs, remote control (R/C) vehicles, or the like, rotor blade pitch for a propeller is characterized based on the distance that the propeller would travel forward in a liquid (with no slippage) for one full revolution of the propeller. For example, a 203.2mm (8-inch) pitch blade would travel forward 203.2 mm (8 inches) in one full revolution, a 508mm (20-inch) pitch blade would travel forward 508mm (20 inches) in one full revolution, and so on. An 203.2mm (8-inch) pitch rotor blade may be considered a lower pitch rotor blade (having a smaller pitch angle at the root end) as compared to a 508mm (20-inch) rotor blade, which may be considered a higher pitch rotor blade (having a larger pitch angle at the root end) for the example comparison.

Example embodiments associated with providing multi-blade rotor systems are described below with more particular reference to the remaining FIGURES. It should be appreciated that example aircraft 100 of FIGS. 1A-1B is merely illustrative of a variety of aircraft in which multi-blade rotor systems may be used in accordance with embodiments of the present disclosure. Other aircraft in which multi-blade rotor systems may be used can include, for example, fixed wing airplanes, hybrid aircraft, unmanned aircraft, a variety of helicopter configurations, and drones, among other examples.

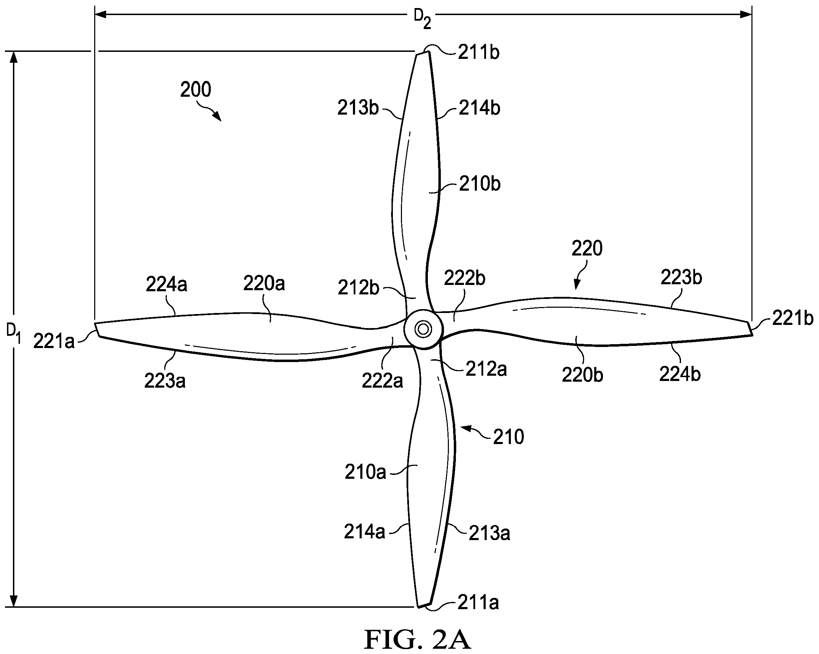

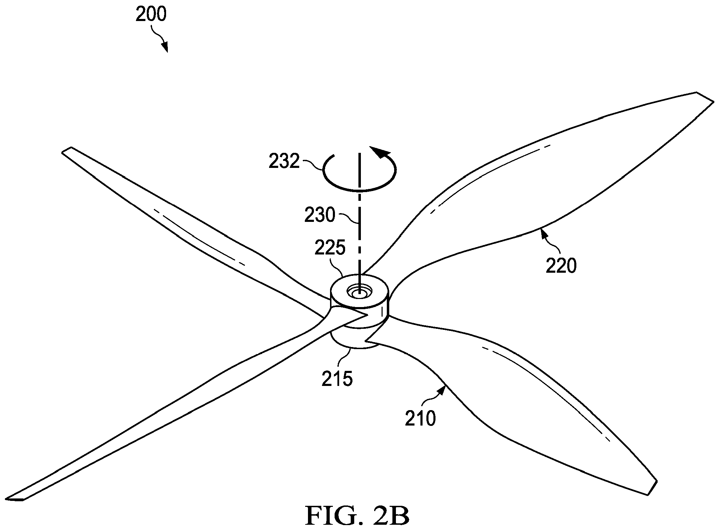

FIGS. 2A-2E are simplified diagrams illustrating example details that may be associated with a multi-blade rotor system 200, in accordance with certain embodiments, 2B and 2E not being covered by the scope of the appended claims. Referring to FIGS. 2A-2B, FIG. 2A is a simplified top view diagram illustrating example details that may be associated with multi-blade rotor system 200 and FIG. 2B is a simplified perspective view diagram illustrating yet other example details that may be associated with multi-blade rotor system 200, Fig. 2B not being covered by the scope of the appended claims.

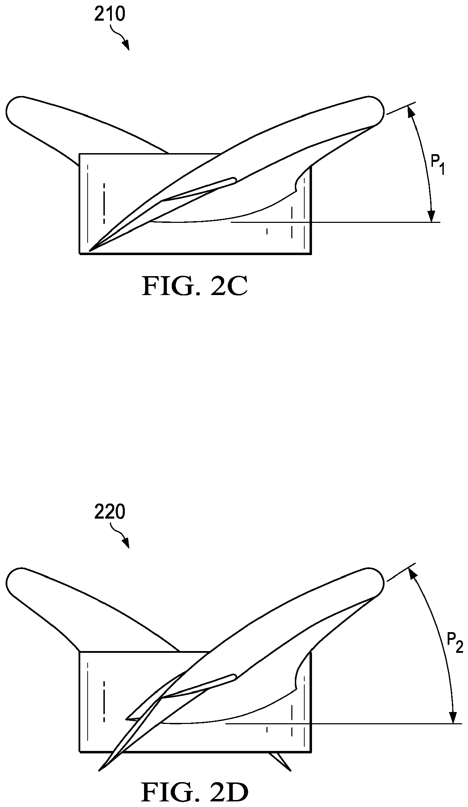

As illustrated in FIG. 2A, multi-blade rotor system may include a first pair of rotor blades 210 and a second pair of rotor blades 220. The first pair of rotor blades 210 may include rotor blades 210a and 210b. Each respective rotor blade 210a, 210b may have a respective tip end 211a, 211b, a respective root end 212a, 212b, a respective leading edge 213a, 213b, and a respective trailing edge 214a, 214b. For the embodiments of FIGS. 2A, 2C and 2D, each respective rotor blade 210a, 210b may also be attached to a first rotor hub 215 at the corresponding root end 212a, 212b of each respective rotor blade 210a, 210b. The first pair of rotor blades 210 may have a first fixed pitch P₁ (as shown at least in FIG. 2C) and a first tip-to-tip diameter D₁, as measured between the tip ends 211a, 211b of rotor blades 210a, 210b (including the diameter (not labeled) of the first rotor hub 215).

The second pair of rotor blades 220 may include rotor blades 220a and 220b. Each respective rotor blade 220a, 220b may have a respective tip end 221a, 221b, a respective root end 222a, 222b, a respective leading edge 223a, 223b, and a respective trailing edge 224a, 224b. For the embodiments of FIGS. 2A, 2C and 2D, each respective rotor blade 220a, 220b may also be attached to a first rotor hub 225 at the corresponding root end 222a, 222b of each respective rotor blade 220a, 220b. The second pair of rotor blades 220 may have a second fixed pitch P₂ (as shown at least in FIG. 2D) and a first tip-to-tip diameter D₂, as measured between the tip ends 221a, 221b of rotor blades 220a, 220b (including the diameter (not labeled) of the second rotor hub 225).

The leading edge of the first and second pairs of rotor blades 210, 220 may be determined based on an axis of rotation (generally illustrated as dashed-line 230 in FIG. 2B) based on the direction that the multi-blade rotor system 200 is rotated (generally illustrated via arrow 232 in FIG. 2B) during operation (e.g., via a motor). The first and second pair of rotor blades 210, 220 may be formed of any suitable materials including, but not limited to, plastics, polymers, composite materials (e.g., carbon fiber, carbon fiber reinforced polymers (CFRPs)), metals, metal alloys, combinations thereof, or the like.

Referring to FIG. 2C, FIG. 2C is a simplified perspective view of the first pair of rotor blades 210, in accordance with certain embodiments. The second pair of rotor blades 220 of multi-blade rotor system 200 are not shown in FIG. 2C in order to illustrate other features of the first pair of rotor blades 210. FIG. 2C illustrates the first fixed pitch P₁ of the first pair of rotor blades 210.

Referring to FIG. 2D, FIG. 2D is a simplified perspective view of the second pair of rotor blades 220, in accordance with certain embodiments. The first pair of rotor blades 210 of multi-blade rotor system 200 are not shown in FIG. 2D in order to illustrate other features of the second pair of rotor blades 220. FIG. 2D illustrates the second fixed pitch P₂ of the second pair of rotor blades 220. For the embodiments of FIGS. 2A, 2C and 2D, the first pitch P₁ is less than the second pitch P₂; thus, the first pair of rotor blades 210 having the lower pitch P₁ are better suited to provide vertical thrust for hovering flight operations while the second pair of rotor blades 220 having the higher pitch P2 are better suited to provide forward thrust for forward flight operations for a VTOL aircraft, such as aircraft 100.

Accordingly, the combination of different fixed pitch rotor blade pairs 210, 220 for multi-blade rotor system 200 in which one of the pitches provides improved hover thrust (e.g., the lower pitch P₁ for the first pair of rotor blades 210) and the other pitch provides improved forward thrust (e.g., the higher pitch P₂ for the second pair of rotor blades 220) may advantageously provide for the ability to improve flight performance across both phases of flight of a VTOL aircraft, such as aircraft 100, in comparison to a rotor system having only a single pair of fixed pitch rotor blades that are suited for only one phase of flight.

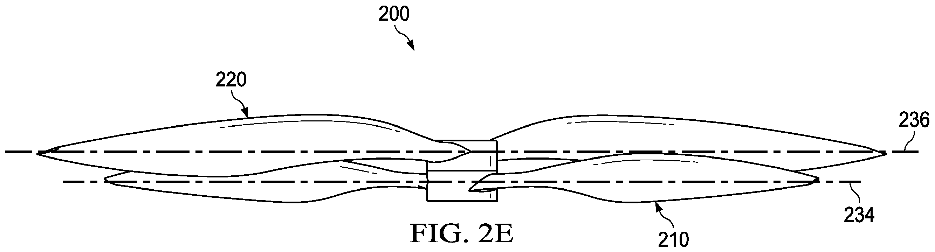

For embodiments of FIGS. 2A, 2C and 2D, the first pair of rotor blades 210 and the second pair of rotor blades 220 are illustrated in a 'stacked' configuration. Referring to FIG. 2E, FIG. 2E is a simplified side view diagram illustrating other example details of multi-blade rotor system 200, not being covered by the scope of the appended claims. As illustrated in FIG. 2E, the first pair of rotor blades 210 are configured in a first horizontal plane (generally illustrated as dashed-line 234) and the second pair of rotor blades 220 are configured in a second horizontal plane (generally illustrated as dashed-line 236) in which the first pair of rotor blades 210 are beneath the second pair of rotor blades 220. Thus, the pairs of rotor blades 210, 220 are considered to be in a multi-plane (non-coplanar) configuration for multi-blade rotor system 200.

In some embodiments, pairs of rotor blades for a multi-blade rotor system may be configured in a coplanar configuration in which one or more pairs of rotor blades of a multi-blade rotor system are configured in a same plane. For example, in some embodiments all pairs of rotor blades of a multi-blade rotor system may be co-planar.

In still some embodiments, two or more pairs of rotor blades of a multi-blade rotor system may be co-planar while one or more pairs of additional rotor blades of the multi-blade rotor system may be non-coplanar with the first two or more pairs of rotor blades.

In some illustrative example not covered by the scope of the appended claims, a lower pitch pair of rotor blades may be beneath a higher pitch pair of rotor blades for a non-coplanar multi-blade rotor system (as illustrated for the embodiments of FIGS. 2A-2E); however, in other illustrative example not covered by the scope of the appended claims, a higher pitch pair of rotor blades may be beneath of lower pitch pair of rotor blades for a non-coplanar multi-blade rotor system. Thus, any configuration of stacked pairs of rotor blades may be provided for a multi-blade rotor system. Different tradeoffs, advantages, etc. (e.g., decreased noise, decreased vibration, increased performance at certain altitudes, increased performance in certain environmental conditions, different configurations for different types of aircraft, different configurations for different propulsion assemblies, etc.) may be realized for different coplanar configurations of multi-blade rotor systems and may be varied according to different design considerations, in accordance with embodiments of the present disclosure.

Further for the illustrative examples of FIGS. 2A-2E, the first pair of rotor blades 210 are attached to the first rotor hub 215 (shown at least in FIG. 2B) and the second pair of rotor blades 220 are attached to the second rotor hub 225 (shown at least in FIG. 2B). In some embodiments, however, pairs of rotor blades of a multi-blade rotor system may be attached to a common rotor hub in any combination of coplanar configurations.

Still further for the embodiments of FIGS. 2A, 2C and 2D, the first diameter D₁ of the first pair of rotor blades 210 is different than the second diameter D₂ of the second pair of rotor blades 220. For example, the first diameter D₁ is less than the second diameter D₂ for the embodiments of FIGS. 2A, 2C and 2D. However, in some embodiments, the first diameter D₁ of a first pair of rotor blades of a multi-blade rotor system and the second diameter D₂ of a second pair of rotor blades of the multi-blade rotor system may be the same. Thus, any configuration of diameters of different pairs of rotor blades may be configured for a multi-blade rotor system, in accordance with embodiments described herein. Different tradeoffs, advantages, etc. (e.g., decreased noise, decreased vibration, increased performance at certain altitudes, increased performance in certain environmental conditions, different configurations for different types of aircraft, different configurations for different propulsion assemblies, etc.) may be realized for different diameters of pairs of rotor blades of multi-blade rotor systems and may be varied according to different design considerations, in accordance with embodiments of the present disclosure.

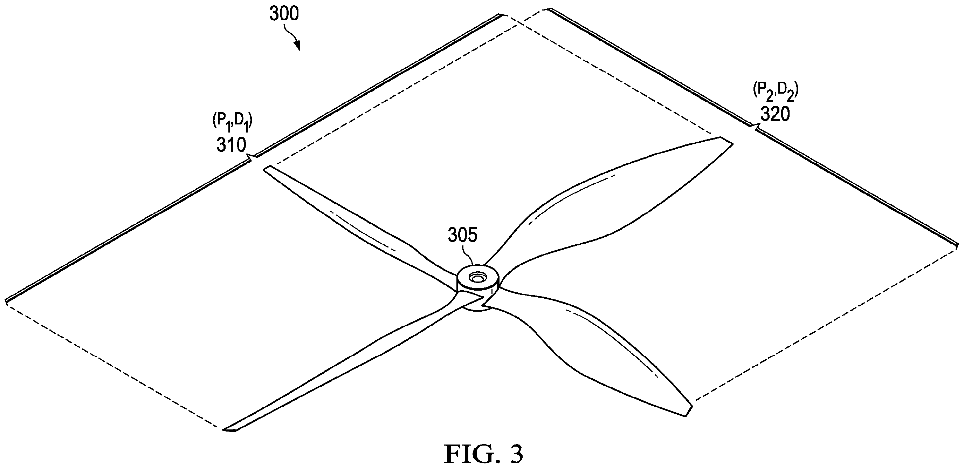

Referring to FIG. 3, FIG. 3 is a simplified perspective view diagram illustrating example details associated with another multi-blade rotor system 300, in accordance with certain embodiments. As illustrated in FIG. 3, multi-blade rotor system 300 includes a first pair of rotor blades 310 having a first fixed pitch P₁ and a first diameter D₁ (P₁, D₁) and a second pair of rotor blades 320 having a second fixed pitch P₂ and a second diameter D₂ (P₂, D₂) in which the first pitch P₁ and the second pitch P₂ are different such that one of the pitches is suited to provide improved thrust for at least one type of flight operations, conditions, etc. (e.g., hover, altitude, etc.) and the other pitch is suited to provide improved thrust for at least one other type of flight operations, conditions, etc. (e.g., forward flight, another altitude, etc.). In various embodiments, the first diameter D₁ and the second diameter D₂ may be the same or different.

The embodiment of FIG. 3 illustrates a configuration in which the different pairs of rotor blades 310, 320 of multi-blade rotor system 300 are provided in a coplanar configuration such that the root ends (not labeled) of each rotor blade of each rotor blade pair are attached to a common rotor hub 305 of the multi-blade rotor system 300. Thus, any configuration of coplanar pairs of rotor blades, non-coplanar pairs of rotor blades, and/or combinations thereof (e.g., a mixture of coplanar and non-coplanar rotor blades) may be provided for a multi-blade rotor system, in accordance with embodiments described herein. Different tradeoffs, advantages, etc. (e.g., decreased noise, decreased vibration, increased performance at certain altitudes, increased performance in certain environmental conditions, different configurations for different types of aircraft, different configurations for different propulsion assemblies, etc.) may be realized for different configurations of planar pairs of rotor blades, non-coplanar pairs of rotor blades, and/or combinations thereof for multi-blade rotor systems and may be varied according to different design considerations, in accordance with embodiments of the present disclosure.

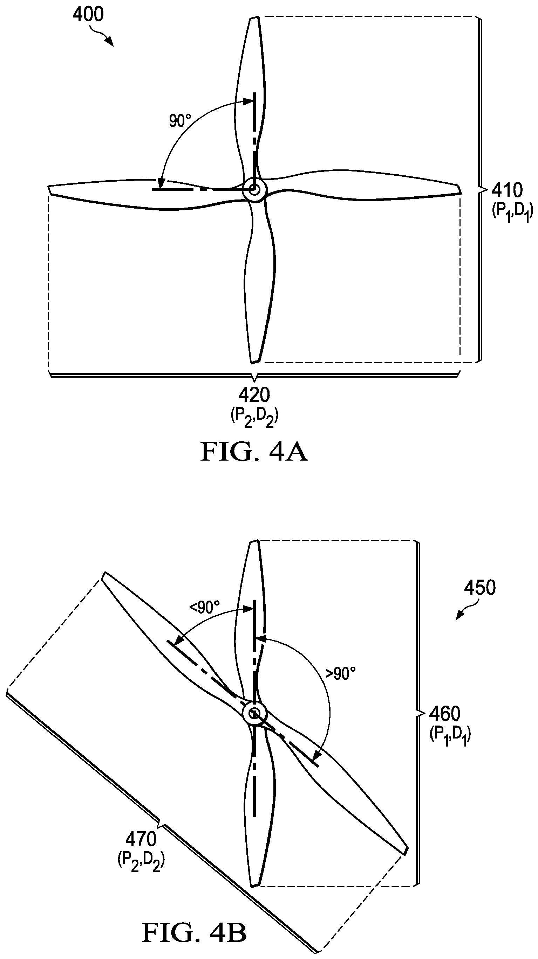

Another variation that may be configured for multi-blade rotor systems may be the angle that may be provided between each rotor blade of a particular rotor blade pair and another rotor blade of another particular rotor blade pair, as discussed below for FIGS. 4A-4B.

Referring to FIGS. 4A-4B, FIGS. 4A-4B are simplified top view diagrams illustrating yet other example details that may be associated with multi-blade rotor systems, in accordance with certain embodiments. FIG. 4A is a simplified top view diagram illustrating a multi-blade rotor system 400 including a first pair of rotor blades 410 having a first fixed pitch P₁ and a first diameter D₁ (P₁, D₁) and a second pair of rotor blades 420 having a second fixed pitch P₂ and a second diameter D₂ (P₂, D₂) in which the first pitch P₁ and the second pitch P₂ are different such that one of the pitches is suited to provide improved thrust for at least one type of flight operations, conditions, etc. and the other pitch is suited to provide improved thrust for at least one other type of flight operation, conditions, etc. For the embodiment of FIG. 4A, the each of the first pair of rotor blades 410 are 90° offset from each of the second pair of rotor blades 420.

FIG. 4B is a simplified top view diagram illustrating a multi-blade rotor system 450 including a first pair of rotor blades 460 having a first fixed pitch P₁ and a first diameter D₁ (P₁, D₁) and a second pair of rotor blades 470 having a second fixed pitch P₂ and a second diameter D₂ (P₂, D₂) in which the first pitch P₁ and the second pitch P₂ are different such that one of the pitches is suited to provide improved thrust for at least one type of flight operations, conditions, etc. and the other pitch is suited to provide improved thrust for at least one other type of flight operations, conditions, etc. For the embodiment of FIG. 4B, the each of the first pair of rotor blades 460 are at a non-90° offset from each of the second pair of rotor blades 470. For example, the offset between certain differently pitched rotor blades is greater than 90° while the offset between other differently pitched rotor blades is less than 90°.

Different tradeoffs, advantages, etc. (e.g., decreased noise, decreased vibration, increased performance at certain altitudes, increased performance in certain environmental conditions, different configurations for different types of aircraft, different configurations for different propulsion assemblies, etc.) may be realized for different offset angles between pairs of rotor blades for multi-blade rotor systems and may be varied according to different design considerations, in accordance with embodiments of the present disclosure.

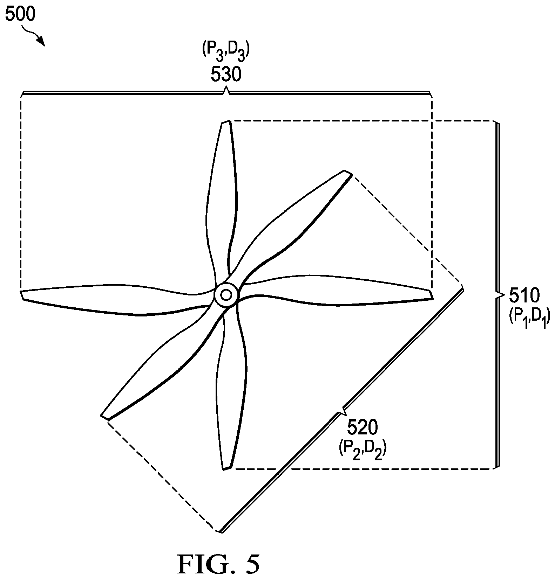

Yet another variation that may be configured for multi-blade rotor systems may be the number of pairs of differently pitched rotor blades that may be provided, as discussed below for FIG. 5.

Referring to FIG. 5, FIG. 5 is a simplified top view diagram illustrating yet other example details that may be associated with another multi-blade rotor system 500, in accordance with certain embodiments. As illustrated in FIG. 5, multi-blade rotor system 500 includes a first pair of rotor blades 510 having a first fixed pitch P₁ and a first diameter D₁ (P₁, D₁), a second pair of rotor blades 520 having a second fixed pitch P₂ and a second diameter D₂ (P₂, D₂), and a third pair of rotor blades 530 have a third fixed pitch P₃ and a third diameter D₃ (P₃, D₃). In various embodiments, any combination of the first pitch PI, the second pitch P2, and the third pitch P3 may be suited to provide improved thrust for any combination of different types of flight operations, conditions, etc.

In various embodiments, a multi-blade rotor system may include two or more pairs of fixed pitch rotor blades in which at least two of the pairs of fixed pitch rotor blades have different pitches to provide improvements for different types of flight operations, conditions, etc.

As discussed for various embodiments described herein, different tradeoffs, advantages, etc. (e.g., decreased noise, decreased vibration, increased performance at certain altitudes, increased performance in certain environmental conditions, different configurations for different types of aircraft, different configurations for different propulsion assemblies, etc.) may be realized for different configurations (e.g., planar, non-coplanar, diameter, offset angle) for two or more pairs of rotor blades for multi-blade rotor systems and may be varied according to different design considerations. It is to be understood that these examples are only a few of the many different configurations that may be provided for multi-blade rotor systems, as discussed herein. Virtually any other configurations may be provided for pairs of fixed pitch rotor blades of a multi-blade rotor system and, thus, are clearly within the scope of the present disclosure.

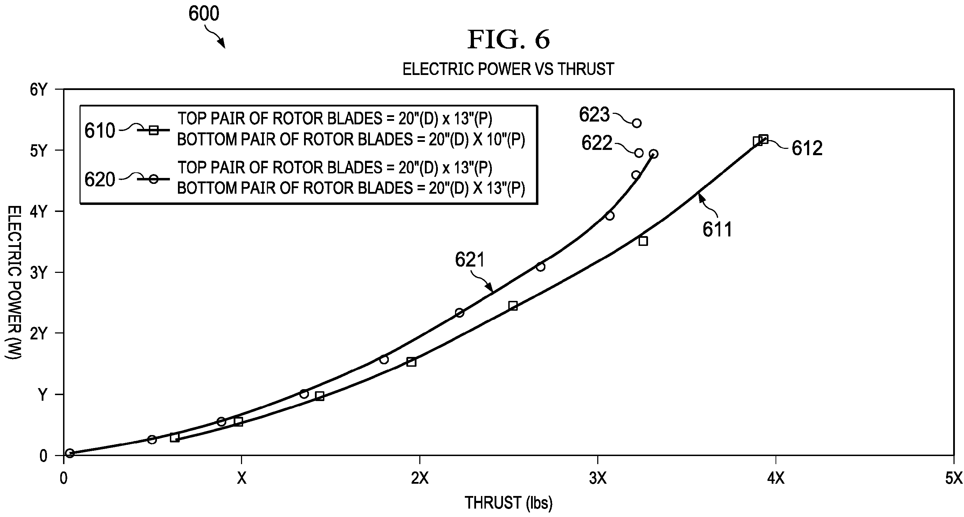

Referring to FIG. 6, FIG. 6 is a graph 600 illustrating thrust (in pounds) versus electrical power (in watts) comparisons for hovering flight operations between two multi-blade rotor systems in which each multi-blade rotor system is in a stacked, non-coplanar configuration. A first multi-blade rotor system 610 includes a top pair of rotor blades having a 508mm (20-inch) diameter and a 330.2mm (13-inch) fixed pitch (20"(D)x13"(P)) and a bottom pair of rotor blades having a 508mm (20-inch) diameter and a 254mm (10-inch) fixed pitch (20"(D)x10"(P)). A second rotor multi-blade system 620 includes a top pair of rotor blades and a bottom pair of rotor blades both having a same 508mm (20-inch) diameter and a same 330.2mm (13-inch) fixed pitch. In general, a lower 254mm (10-inch) pitch rotor blade is better suited to provide hover thrust than a higher 330.2mm (13-inch) pitch rotor blade. The graph 600 illustrates a first power curve 611 associated with the first multi-blade rotor system 610 and a second power curve 621 associated with the second multi-blade rotor system 620.

As illustrated in the graph 600, the second multi-blade rotor system 620 stalls at a point 622, such that increases in power do not result in increased hover (vertical) thrust but rather the thrust decreases at point 623 for the second multi-blade rotor system 620. In contrast, the power curve 611 for the first multi-blade rotor system 610 illustrates that that a higher hover thrust is achievable for higher power, as shown at point 612, based on the lower 254mm (10-inch) pitch rotor blade provided for the first multi-blade rotor system. Thus, the power curve 611 illustrates that the first multi-blade rotor system 610 having one lower pitched pair of rotor blades and one higher pitched pair of rotor blades is operable to provide a higher hover thrust than the second multi-blade rotor system 620 that has two higher pitched rotor blade pairs.

As previously noted, in certain embodiments described herein, rotor blades of differing pitch are selected, such that a first pair of rotor blades has a first pitch and a first diameter and a second pair of rotor blades has a second pitch and a second diameter, wherein the first pitch is different than the second pitch such that one rotor blade pitch operates well for hover operations while the other rotor blade pitch operates well for forward flight operations.

The diagrams in the FIGURES illustrate the architecture, functionality, and/or operation of possible implementations of various embodiments of the present disclosure.

Numerous changes, substitutions, variations, alterations, and modifications, within the scope of appended claims, may be ascertained to one of ordinary skill in the art and it is intended that the present disclosure encompass ll such changes, substitutions, variations, alterations, and modifications as falling within the scope of the appended claims.

One or more advantages mentioned herein do not in any way suggest that any one of the embodiments described herein necessarily provides all the described advantages or that all the embodiments of the present disclosure necessarily provide any one of the described advantages. Note that in this Specification, references to various features included in 'one embodiment', 'example embodiment', 'an embodiment', 'another embodiment', 'certain embodiments', 'some embodiments', 'various embodiments', 'other embodiments', 'alternative embodiment', and the like are intended to mean that any such features are included in one or more embodiments of the present disclosure, but may or may not necessarily be combined in the same embodiments.

As used herein, unless expressly stated to the contrary, use of the phrase 'at least one of', 'one or more of' and 'and/or' are open ended expressions that are both conjunctive and disjunctive in operation for any combination of named elements, conditions, or activities. For example, each of the expressions 'at least one of X, Y and Z', 'at least one of X, Y or Z', 'one or more of X, Y and Z', 'one or more of X, Y or Z' and 'A, B and/or C' can mean any of the following: 1) X, but not Y and not Z; 2) Y, but not X and not Z; 3) Z, but not X and not Y; 4) X and Y, but not Z; 5) X and Z, but not Y; 6) Y and Z, but not X; or 7) X, Y, and Z. Additionally, unless expressly stated to the contrary, the terms 'first', 'second', 'third', etc., are intended to distinguish the particular nouns (e.g., blade, rotor, element, device, condition, module, activity, operation, etc.) they modify. Unless expressly stated to the contrary, the use of these terms is not intended to indicate any type of order, rank, importance, temporal sequence, or hierarchy of the modified noun. For example, 'first X' and 'second X' are intended to designate two X elements that are not necessarily limited by any order, rank, importance, temporal sequence, or hierarchy of the two elements. As referred to herein, 'at least one of', 'one or more of', and the like can be represented using the '(s)' nomenclature (e.g., one or more element(s)).

## Claims

1. A rotor system (200,300,400,500,610,620) comprising:
a first pair of rotor blades (210,310,410,460,510) comprising a first fixed pitch and a first tip-to-tip diameter; and
a second pair of rotor blades (220,320,420,470,520) comprising a second fixed pitch and a second tip-to-tip diameter, wherein the first fixed pitch of the first pair of rotor blades (210,310,410,460,510) and the second fixed pitch of the second pair of rotor blades (220,320,420,470,520) are different, wherein the first tip-to-tip diameter of the first pair of rotor blades (210,310,410,460,510) and the second tip-to-tip diameter of the second pair of rotor blades (220,320,420,470,520) are different and wherein the first pair of rotor blades (210,310,410,460,510) and the second pair of rotor blades (220,320,420,470,520) are configured in the same horizontal plane.

2. An aircraft (100) comprising:
the rotor system (200,300,400,500,610,620) of claim 1.

3. The rotor system (200,300,400,500,610,620) of Claim 1 or the aircraft (100) of claim 2 , wherein an angle between each blade (210a,210b) of the first pair of rotor blades (210,310,410,460,510) and each blade (220a,22b) of the second pair of rotor blades (220,320,420,470,520) is ninety degrees.

4. The rotor system (200,300,400,500,610,620) of Claim 1 or the aircraft (100) of claim 2, wherein an angle between each blade (210a,210b) of the first pair of rotor blades (210,310,410,460,510) and each blade (220a,220b) of the second pair of rotor blades (220,320,420,470,520) is not ninety degrees.

5. The rotor system (200,300,400,500,610,620) of any preceding rotor system claim, or the aircraft (100) of any preceding aircraft claim, further comprising one or more additional pairs of rotor blades.

6. The rotor system (200,300,400,500,610,620) or aircraft (100) of Claim 5, wherein at least one of the one or more additional pairs of rotor blades has a fixed pitch that is different than at least one of the first fixed pitch of the first pair of rotor blades (210,310,410,460,510) and the second fixed pitch of the second pair of rotor blades (220,320,420,470,520).

7. The rotor system (200,300,400,500,610,620) or aircraft (100) of Claim 5 or 6, wherein at least one of the one or more additional pairs of rotor blades has a diameter that is different than at least one of the first diameter of the first pair of rotor blades (210,310,410,460,510) and the second diameter of the second pair of rotor blades (220,320,420,470,520).

8. The aircraft (100) of any preceding aircraft claim, wherein the rotor system (200,300,400,500,610,620) is a first rotor system (200,300,400,500,610,620), the aircraft (100) further comprising one or more additional rotor systems (200,300,400,500,610,620).

9. The aircraft (100) of any preceding aircraft claim, wherein the aircraft (100) is configured as a vertical takeoff and landing aircraft (VTOL).

## Patentansprüche

1. Rotorsystem (200, 300, 400, 500, 610, 620), umfassend:
ein erstes Rotorblätterpaar (210, 310, 410, 460, 510), umfassend einen ersten festen Anstellwinkel und einen ersten Spitze-zu-Spitze-Durchmesser; und
ein zweites Rotorblätterpaar (220, 320, 420, 470, 520), umfassend einen zweiten festen Anstellwinkel und einen zweiten Spitze-zu-Spitze-Durchmesser, wobei der erste feste Anstellwinkel des ersten Rotorblätterpaares (210, 310, 410, 460, 510) und der zweite feste Anstellwinkel des zweiten Rotorblätterpaares (220, 320, 420, 470, 520) unterschiedlich sind, wobei der erste Spitze-zu-Spitze-Durchmesser des ersten Rotorblätterpaares (210, 310, 410, 460, 510) und der zweite Spitze-zu-Spitze-Durchmesser des zweiten Rotorblätterpaares (220, 320, 420, 470, 520) unterschiedlich sind und wobei das erste Rotorblätterpaar (210, 310, 410, 460, 510) und das zweite Rotorblätterpaar (220, 320, 420, 470, 520) ausgebildet sind, um in der gleichen horizontalen Ebene zu sein.

2. Luftfahrzeug (100), umfassend:
das Rotorsystem (200, 300, 400, 500, 610, 620) nach Anspruch 1.

3. Rotorsystem (200, 300, 400, 500, 610, 620) nach Anspruch 1 oder Luftfahrzeug (100) nach Anspruch 2, wobei ein Winkel zwischen jedem Blatt (210a, 210b) des ersten Rotorblätterpaares (210, 310, 410, 460, 510) und jedem Blatt (220a, 22b) des zweiten Rotorblätterpaares (220, 320, 420, 470, 520) neunzig Grad beträgt.

4. Rotorsystem (200, 300, 400, 500, 610, 620) nach Anspruch 1 oder Luftfahrzeug (100) nach Anspruch 2, wobei ein Winkel zwischen jedem Blatt (210a, 210b) des ersten Rotorblätterpaares (210, 310, 410, 460, 510) und jedem Blatt (220a, 220b) des zweiten Rotorblätterpaares (220, 320, 420, 470, 520) nicht neunzig Grad beträgt.

5. Rotorsystem (200, 300, 400, 500, 610, 620) nach einem vorstehenden Rotorsystem-Anspruch oder Luftfahrzeug (100) nach einem vorstehenden Luftfahrzeug-Anspruch, weiter umfassend ein oder mehrere zusätzliche Rotorblätterpaare.

6. Rotorsystem (200, 300, 400, 500, 610, 620) oder Luftfahrzeug (100) nach Anspruch 5, wobei mindestens eines der ein oder mehreren zusätzlichen Rotorblätterpaare einen festen Anstellwinkel aufweist, der sich von mindestens einem von dem ersten festen Anstellwinkel des ersten Rotorblätterpaares (210, 310, 410, 460, 510) und dem zweiten festen Anstellwinkel des zweiten Rotorblätterpaares (220, 320, 420, 470, 520) unterscheidet.

7. Rotorsystem (200, 300, 400, 500, 610, 620) oder Luftfahrzeug (100) nach Anspruch 5 oder 6, wobei mindestens eines der ein oder mehreren zusätzlichen Rotorblätterpaare einen Durchmesser aufweist, der sich von mindestens einem von dem ersten Durchmesser des ersten Rotorblätterpaares (210, 310, 410, 460, 510) und dem zweiten Durchmesser des zweiten Rotorblätterpaares (220, 320, 420, 470, 520) unterscheidet.

8. Luftfahrzeug (100) nach einem der vorstehenden Luftfahrzeug-Ansprüche, wobei das Rotorsystem (200, 300, 400, 500, 610, 620) ein erstes Rotorsystem (200, 300, 400, 500, 610, 620) ist, wobei das Luftfahrzeug (100) weiter ein oder mehrere zusätzliche Rotorsysteme (200, 300, 400, 500, 610, 620) umfasst.

9. Luftfahrzeug (100) nach einem der vorstehenden Luftfahrzeug-Ansprüche, wobei das Luftfahrzeug (100) als senkrecht startendes und landendes Luftfahrzeug (VTOL) ausgebildet ist.

## Revendications

1. Système de rotor (200, 300, 400, 500, 610, 620) comprenant :
une première paire de pales de rotor (210, 310, 410, 460, 510) comprenant un premier pas fixe et un premier diamètre d'extrémité à extrémité ; et
une seconde paire de pales de rotor (220, 320, 420, 470, 520) comprenant un second pas fixe et un second diamètre d'extrémité à extrémité, dans lequel le premier pas fixe de la première paire de pales de rotor (210, 310, 410, 460, 510) et le second pas fixe de la seconde paire de pales de rotor (220, 320, 420, 470, 520) sont différents, dans lequel le premier diamètre d'extrémité à extrémité de la première paire de pales de rotor (210, 310, 410, 460, 510) et le second diamètre d'extrémité à extrémité de la seconde paire de pales de rotor (220, 320, 420, 470, 520) sont différents et dans lequel la première paire de pales de rotor (210, 310, 410, 460, 510) et la seconde paire de pales de rotor (220, 320, 420, 470, 520) sont configurées dans le même plan horizontal.

2. Aéronef (100) comprenant :
le système de rotor (200, 300, 400, 500, 610, 620) selon la revendication 1.

3. Système de rotor (200, 300, 400, 500, 610, 620) selon la revendication 1 ou aéronef (100) selon la revendication 2, dans lequel un angle entre chaque pale (210a, 210b) de la première paire de pales de rotor (210, 310, 410, 460, 510) et chaque pale (220a, 22b) de la seconde paire de pales de rotor (220, 320, 420, 470, 520) est de quatre-vingt-dix degrés.

4. Système de rotor (200, 300, 400, 500, 610, 620) selon la revendication 1 ou aéronef (100) selon la revendication 2, dans lequel un angle entre chaque pale (210a, 210b) de la première paire de pales de rotor (210, 310, 410, 460, 510) et chaque pale (220a, 220b) de la seconde paire de pales de rotor (220, 320, 420, 470, 520) n'est pas de quatre-vingt-dix degrés.

5. Système de rotor (200, 300, 400, 500, 610, 620) selon une quelconque revendication précédente de système de rotor, ou aéronef (100) selon une quelconque revendication précédente d'aéronef, comprenant en outre une ou plusieurs paires additionnelles de pales de rotor.

6. Système de rotor (200, 300, 400, 500, 610, 620) ou aéronef (100) selon la revendication 5, dans lequel au moins l'une des une ou plusieurs paires additionnelles de pales de rotor a un pas fixe qui est différent d'au moins l'un du premier pas fixe de la première paire de pales de rotor (210, 310, 410, 460, 510) et du second pas fixe de la seconde paire de pales de rotor (220, 320, 420, 470, 520).

7. Système de rotor (200, 300, 400, 500, 610, 620) ou aéronef (100) selon la revendication 5 ou 6, dans lequel au moins l'une des une ou plusieurs paires additionnelles de pales de rotor a un diamètre qui est différent d'au moins l'un du premier diamètre de la première paire de pales de rotor (210, 310, 410, 460, 510) et du second diamètre de la seconde paire de pales de rotor (220, 320, 420, 470, 520).

8. Aéronef (100) selon une quelconque revendication précédente d'aéronef, dans lequel le système de rotor (200, 300, 400, 500, 610, 620) est un premier système de rotor (200, 300, 400, 500, 610, 620), l'aéronef (100) comprenant en outre un ou plusieurs systèmes de rotor (200, 300, 400, 500, 610, 620) additionnels.

9. Aéronef (100) selon une quelconque revendication précédente d'aéronef, dans lequel l'aéronef (100) est configuré comme un aéronef à décollage et atterrissage verticaux (VTOL).
